# EUROPEAN PATENT APPLICATION

(11) **EP 4 576 807 A1**
(43) Date of publication of application: **25.06.2025**
(21) Application number: 23218183.4
(22) Date of filing: 19.12.2023
(51) Int. Cl.: H04Q 11/00

(54) **DISCOVERY OF OPTICAL NETWORK UNITS IN A PASSIVE OPTICAL NETWORK**

(71) Applicant: Nokia Solutions and Networks Oy, 02610 Espoo (FI)
(72) Inventor: PEREZ BLANCO, Ricardo, 2018 Antwerp (BE); VAN HOOF, Werner, 2630 Aartselaar (BE)
(74) Representative: IP HILLS NV

(57) **Abstract**

An optical line terminal, OLT, for a passive optical network, PON, configured to provide discovery of optical network units, ONUs, by performing the steps of: broadcasting at least one message, comprising an indication of an availability of the OLT for discovering new ONUs; and a selecting condition limiting the new ONUs to a subset of ONUs located within a predetermined distance range from the OLT; and listening, during a quiet window associated with the predetermined distance range, for messages in response to the broadcasting, sent by the subset of ONUs.

## Description

### Technical Field

Various example embodiments relate to discovery of optical network units in a passive optical network.

### Background

Passive optical networks, PONs, provide telecommunication by use of fibre-optic technology. PONs have a one-to-multiple structure, wherein a central optical line terminal, OLT, services a plurality of optical network units, ONUs. The OLT and ONUs are connected via an optical distribution network, ODN, comprising passive elements, such as fibre-optic cables and passive optical splitters.

When a new ONU is added to the PON, the ONU is assisted by the OLT to become operational within the PON through a process referred to as ONU discovery. During the discovery process, the OLT may detect new ONUs, communicate with new ONUs to determine a message travel time and exchange necessary communication information. The OLT may, for example, request a serial number of new ONUs for identification purposes.

### Summary

According to some aspects, there is provided the subject matter of the independent claims. Some further aspects are defined in the dependent claims.

According to a first example aspect, there is provided an optical line terminal, OLT, for a passive optical network, PON, configured to provide discovery of optical network units, ONUs. The OLT is configured to perform a step of broadcasting at least one message. The at least one message comprises an indication of an availability of the OLT for discovering new ONUs. The at least one message also comprises a selecting condition limiting the new ONUs to a subset of ONUs located within a predetermined distance range from the OLT. The OLT is further configured to perform a step of listening, during a quiet window associated with the predetermined distance range, for messages in response to the broadcasting, sent by the subset of ONUs.

ONU discovery refers to schemes, executed by an OLT, that allow new ONUs to join the PON. After becoming physically connected to the PON, a new ONU needs to be set-up to function according to communication rules enforced by the OLT. This configuring of a new ONU is performed by establishing communication between the new ONU and the OLT. A first step of establishing communication entails the OLT providing an indication of availability for discovery of new ONUs. The indication indicates that the OLT is ready to listen and undiscovered ONUs are allowed to publicise themselves. The indication thus implies a permission given to new ONUs to transmit an optical signal via the ODN. The quiet window is a timeslot during which an OLT transceiver is exclusively reserved for listening to responses potentially sent by prospective ONUs. During the quiet window, the OLT may receive optical signals from prospective ONUs and the OLT optical transceiver cannot be used for other operations. The OLT covers a service area of ONUs that are located within a certain distance, e.g. between 5 kilometres, km, and 20 km from the OLT. The length of the quiet window is determined by the difference in distance between the farthest and the closest ONU with respect to the OLT, e.g. 15 km. After sending a message over the ODN, the OLT knows a minimal time and a maximal time before a response from prospective ONUs may possibly arrive back at the OLT. The minimal time is the time it may take for a response of the closest ONU to arrive back at the OLT. The maximal time is the time it may take for a response of the farthest ONU to arrive back at the OLT. The minimal and maximal times define the boundaries of the quiet window. Additional margins are advantageously taken into account as well.

By providing the selecting condition, the OLT enforces that only prospective ONUs within a predefined distance interval from the OLT may respond during the corresponding quiet window. Essentially, a long quiet window of the OLT is divided into multiple shorter quiet windows that can be executed separately. Accordingly, the service area of the PON is divided into predetermined distance ranges defined by each of the quiet windows. Since during a quiet window, OLT resources are reserved for listening, other tasks may suffer as a result of having to wait too long for the OLT. The separate quiet windows can be applied in an isolated way instead of consecutively as one long quiet window. In other words, the OLT can execute other operations between the shorter quiet windows resulting from applying the selecting condition. This reduces the bottleneck time during which the OLT is blocked for performing the listening. As such, the worst case waiting time for other operations is greatly improved. In addition, the method is compatible with any protocol for PONs since it does not impose any protocol-related restrictions.

Similar to the OLT quiet window, an ONU may define one or more quiet windows during which it waits for signals sent by the OLT. However, the quiet window referred to herein is the quiet window from the perspective of the OLT. The OLT quiet window is the paramount bottleneck that is reduced by the first example aspect.

According to an example embodiment, the quiet window has a duration of at least a difference between a message travel time between the OLT and an ONU of the subset located furthest away from the OLT and a message travel time between the OLT to an ONU of the subset located closest to the OLT.

During a quiet window corresponding to a certain selecting condition, the OLT listens for messages from ONUs in the corresponding distance range. The quiet window may start at the earliest possible time when a response from an ONU may arrive back at the OLT. This time is determined by a physical distance to the ONU closest to the OLT, since it has the shortest message travel time. The quiet window ends at the latest possible time when a response from an ONU may arrive back at the OLT. This time is determined by the ONU farthest away from the OLT, since it has the longest message travel time. The difference in message travel times corresponds to a message travel time from the closest ONU to the farthest ONU of the distance range. Additionally, margins may be included in the quiet window to ensure reception of unwanted delays of responses from ONUs.

By providing the quiet window as having a duration of the difference, the OLT is configured to listen only to ONUs within the predetermined distance range. As such, the quiet window is kept short.

According to an example embodiment, the listening starts after a first time interval upon finishing the broadcasting, wherein the first time interval is at least two times the message travel time between the OLT and the ONU of the subset located closest to the OLT.

The first time interval comprises the time it takes for the indication to travel from the OLT to the closest ONU added to the time it takes for a response to arrive back from to the OLT.

After sending the indication, it will take at least a message travel time to and from the closest ONU before any response can arrive to the OLT. During this initial time interval, no responses can arrive from ONUs, making listening needless. By excluding this message travel time from the quiet window, the quiet window is reduced in length without allowing the OLT to miss possible responses from ONUs in the range. The quiet window can be kept short even when the closest ONU of the range is relatively far away from the OLT.

According to example embodiments, the steps are iteratively performed for a plurality of subsets of ONUs within a respective plurality of predetermined distance ranges.

The predetermined distance ranges may be overlapping or may be nonoverlapping. Advantageously, a small overlap may be provided in order to include margins. Slightly stretching the quiet window allows receiving responses that have been delayed due to non-ideal optical effects.

By sequentially handling separate distance ranges, ONUs within different distance ranges can be serviced for discovery. Advantageously, the plurality of predetermined distance ranges may cover a service area of the OLT.

According to example embodiments, the at least one message further comprises condition-related information comprising information for evaluation of the selecting condition.

Depending on the selecting condition, ONUs might need additional information in order to evaluate the selecting condition, e.g. a parameter value. By providing condition-related information, either in a separate message or together with the selecting condition, complex selecting conditions may be devised that provide an efficient discovery process.

According to example embodiments, the at least one message comprises a broadcasting message, comprising both the indication and the selecting condition.

By providing the indication and the condition in a single message, only one message needs to be transmitted by the OLT, reducing discovery overhead.

According to example embodiments, the at least one message comprises a discovery message, comprising the indication, and a condition message, comprising the selecting condition.

By providing the indication and the selecting condition in separate messages, more options are provided to discover ONUs in accordance with existing standards and protocols.

According to example embodiments, the at least one message further comprises an additional message comprising the condition-related information. Alternatively, the broadcasting message may further comprise the condition-related information. Alternatively, the discovery message or the condition message may comprise the condition-related information.

According to example embodiments, the discovery message is broadcasted after the condition message.

By providing the discovery message after the condition message, ONUs may precompute a result of the selecting condition before receiving the indication. This may advantageously reduce the time of the discovery process.

According to example embodiments, the at least one message comprises at least one Physical Layer Operation Administration and Maintenance, PLOAM, message.

PLOAM messages are defined according to PON protocols including higher speed passive optical networks, HS-PON, and provide an efficient, transport convergence communication between the OLT and ONUs.

According to example embodiments, the discovery message comprises a bandwidth map, BWmap, message comprising a request for a serial number of prospective ONUs. The condition message may be a Physical Layer Operation Administration and Maintenance, PLOAM, message.

A BWmap message comprises information defining the timeslots reserved for an ONU on a particular wavelength in upstream communication. The BWmap message addresses a particular ONU by allocating an identifier to each ONU beforehand. Advantageously, the BWmap message provides the option of requesting an ONU to provide its serial number. By utilising BWmap messages, the ONU discovery process is compatible with existing protocols.

According to example embodiments, the OLT is configured to further broadcast a system profile message, a channel profile message and a burst profile message, providing properties of the PON and of the OLT to ONUs of the PON. System, channel and burst profile messages are PLOAM messages comprising system, channel and upstream communication properties of the PON respectively. They may be broadcasted regularly, thereby allowing new ONUs to participate in ONU discovery.

According to example embodiments, the selecting condition defines a message travel time range corresponding to a range of travel times of messages exchanged between the OLT and ONUs within the predetermined distance range.

Travel time can be assumed to be linearly dependent on distance within the PON. Therefore, the time-related selecting condition enables enforcing the predetermined distance range in an uncomplicated way.

According to example embodiments, the selecting condition comprises a timestamp with respect to an internal clock of the OLT and a mapping between the internal clock and a common reference clock, for calculation of the message travel time range by the ONUs.

An ONU comprises its own local, internal ONU clock, e.g. a counter, similar to the internal clock at the OLT. To be able to operate according to timing schemes, e.g. time-division multiplexing, set up by the OLT, the ONU needs to synchronise its internal ONU clock with the internal OLT clock. After all, timing schemes are defined in terms of the internal OLT clock. Evaluation of the time-related selecting condition by an ONU also depends on synchronisation between OLT and ONU. An ONU may be configured to, upon receiving the timestamp and the mapping, translate the common reference clock to the internal clock of the OLT, in order to reproduce a local version of the OLT clock as its own internal clock. To this end, the ONU needs to have access to the common reference clock, to interpret the timestamp correctly. Therefore, the reference clock needs to be common or accessible by both the OLT and the ONU. If the common reference clock corresponds to the world clock, the ONU may comprise a global positioning system, GPS, receiver and/or may be configured to synchronise with mobile networks and/or may be configured to obtain the world clock by other means.

The ONU needs to determine the travel time to the OLT in order to examine whether or not it satisfies the time-related selecting condition. However, before discovery of a prospective ONU, the OLT and the prospective ONU are not yet synchronised. The timestamp and the mapping provide a synchronisation that may allow the ONU to evaluate the time-related selecting condition efficiently and accurately. The internal clock of the OLT may correspond to a so-called superframe counter. The common reference clock may correspond to the world clock. The mapping between the internal clock and a common reference clock may be regarded as condition-based information.

According to example embodiments, the selecting condition is based on dispersion characteristics corresponding with the predetermined distance range.

Dispersion is the effect that a propagation velocity of a travelling wave depends on its frequency. The dependency is determined by the medium through which the wave travels. The ONU can be provided with knowledge of the dispersion characteristics of the PON. In addition, the ONU may perform velocity measurements, e.g. measuring the group velocity and/or phase velocity of an incoming optical signal. The velocity measurements may advantageously comprise making use of coherent optics, thereby obtaining velocity measurements of different wavelength components. Using the dispersion characteristics in combination with the measurements, the ONU may calculate a velocity drift of the optical wave, e.g. the absolute drift of the group phase velocity. Since the velocity drift is related to distance within the PON, the dispersion-based selecting condition may correspond to a predetermined distance range.

According to example embodiments, the at least one message further comprises physical PON characteristics enabling an ONU to determine a distance to the OLT.

PON topology information may include the length of optical cables, the number and locations of optical splitters and fibre optic connectors and other components. The physical PON characteristics may also include physical characteristics of the fibre optic, fibre optic connectors and other components, e.g. expected signal loss. The PON topology information is an example of condition-related information. From the topology characteristics, an ONU may derive its distance to the OLT. Accordingly, the selecting condition may be distance-based.

The selecting condition may be based on message travel time and/or on dispersion characteristics and/or on other properties that vary throughout the PON and that are relatable to a distance range.

According to a second example aspect, there is provided an optical network unit, ONU, configured to join a passive optical network, PON, by performing a step of receiving at least one message from an optical line terminal, OLT. The at least one message comprises: an indication of an availability of the OLT; and a selecting condition related to a predetermined distance range from the OLT. The ONU is further configured to perform a step of determining if the ONU fulfils the selecting condition and a step of, upon determining that the ONU fulfils the selecting condition, sending a response message to the OLT to join the PON.

The ONU is compatible with the OLT according to the first example for ONU discovery.

According to example embodiments, the at least one message comprises a bandwidth map, BWmap, message comprising a request for a serial number, and the response message comprises a serial number of the ONU.

According to example embodiments, the ONU is further configured to receive a system profile message, a channel profile message and a burst profile message from the OLT and to therefrom derive properties of the PON and of the OLT for communicating with the OLT.

The properties may include a system version number, upstream wavelength bands, time-division multiplexing information, an upstream line rate, preamble and delimiter patterns and so on.

According to example embodiments, the selecting condition defines a message travel time range corresponding to a range of travel times of messages exchanged between the OLT and ONUs within the predetermined distance range; the selecting condition comprises a timestamp with respect to an internal clock of the OLT and a mapping between the internal clock and a common reference clock; and the determining if the ONU fulfils the selecting condition comprises calculating a message travel time based on the timestamp and the mapping.

According to example embodiments, the selecting condition is based on dispersion characteristics corresponding with the predetermined distance range, and wherein the determining if the ONU fulfils the selecting condition further comprises detecting dispersion characteristics of the at least one message.

According to example embodiments, the at least one message further comprises PON topology information, and the ONU is further configured to determine a distance to the OLT based on the PON topology information.

According to a third example aspect, there is provided a method for including prospective optical network units, ONU, in a passive optical network, PON, comprising an optical line terminal, OLT. The method comprises a step of, by the OLT, broadcasting at least one message. The at least one message comprises an indication of an availability of the OLT for discovering new ONUs; and a selecting condition limiting the new ONUs to a subset of ONUs located within a predetermined distance range from the OLT. The method further comprises a step of, by the OLT, listening, during a quiet window associated with the predetermined distance range, for messages in response to the broadcasting, sent by the subset of ONUs. The method further comprises a step of, by the prospective ONUs, receiving the at least one message. The method further comprises a step of, by the prospective ONUs, determining if the prospective ONUs fulfil the selecting condition. The method further comprises a step of, by the prospective ONUs, upon determining that the prospective ONUs fulfil the selecting condition, sending a response message to the OLT.

### Brief Description of the Drawings

Fig. 1 shows a schematic view of a passive optical network, PON.
Fig. 2 shows a schematic view of predetermined distance ranges within a PON.
Fig. 3 shows a schematic view of communication between an optical line terminal, OLT, and an prospective optical network unit, ONU, during ONU discovery.

### Detailed Description of Embodiment(s)

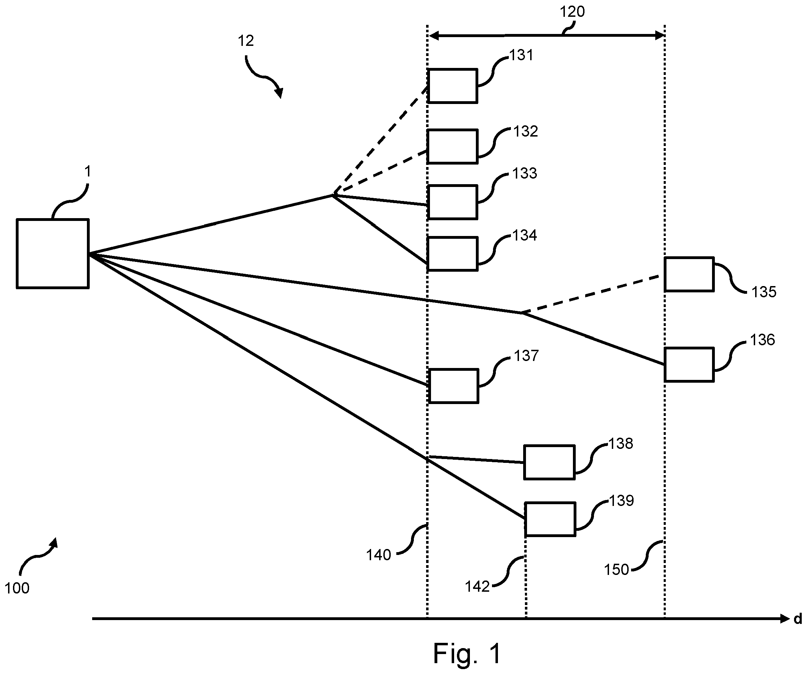

In Figure 1, a passive optical network 100, PON, is illustrated. The PON 100 may operate according to any PON protocol, e.g. standard G.9804.2 defined for higher speed PONs, also referred to as HS-PON, gigabit ethernet PON, GPON, 10 gigabit ethernet PON, XG-PON, 10 gigabit symmetric PON, XGS-PON, next generation PON 2, NG-PON-2, and multi-source agreement 25 gigabit symmetric PON, MSA 25GPON. These example standards were devised by the International Telecommunication Union, ITU. The network 100 comprises an optical line terminal 1, OLT, and optical network units 131, 132, 133, 134, 135, 136, 137, 138, 139, ONUs. The ONUs are located between a distance 140, e.g. 5 kilometres, km, and a distance 150, e.g. 20 km, away from the OLT. The distance from the OLT is indicated by an axis denoted with the letter "d". The ONUs are limited to reside within a distance range 120, e.g. 15 km, being the difference between distance 150 and distance 140. The ONUs 131, 132, 133, 134, 137 are located at the distance 140 from the OLT. The ONUs 138, 139 are located at a distance 142, e.g. 12 km, from the OLT. The ONUs 135, 136 are located at the distance 150 from the OLT. The distances 140, 142, 150 may be defined between an optical transmitter of the OLT and an optical receiver of an ONU. An optical distribution network 12 is illustrated and may comprise optical fibres, optical splitters and other optical elements. In the example of Figure 1, ONUs 131, 132 and 135 are connected to the ODN 12 by dashed lines to indicate that they are prospective ONUs wishing to join the PON 100. The OLT 1 may discover the ONUs 131, 132, 135. ONUs 131, 132, 135 are physically connected to the ODN 12, yet have do not yet been initialised to operate within the PON.

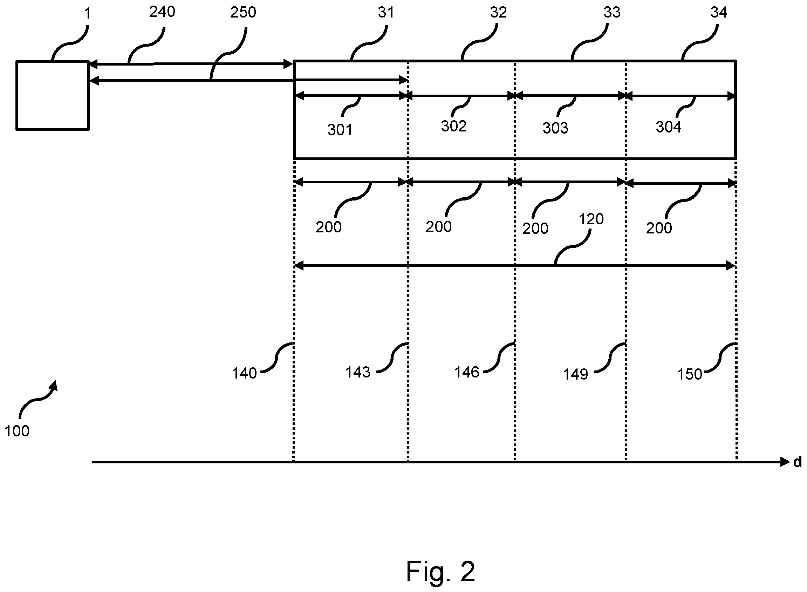

Turning to Figure 2, more details of the distance range 120 are illustrated. The OLT 1 is again schematically shown. Optical receivers of the ONUs 131-139 still reside within the distance range 120, but are no longer shown. In Figure 2, the distance range 120 is divided into four subsets 31, 32, 33, 34 of ONUs that are located within a predetermined distance range 301, 302, 303, 302. More or less subsets may be provided. The distance ranges 301, 302, 303, 302 may combinedly cover the service area of the PON. Advantageously, an overlapping of the distance ranges, not illustrated in Figure 2, may be provided in order to provide safety margins. Distance range 301 extends between distance 140 and distance 143. The ONU of subset 31 that is located closest to the OLT 1, e.g. at distance 140, is distanced a length 240 away from the OLT. The ONU of subset 31 that is located farthest from the OLT 1, e.g. at distance 143, is distanced a length 250 away from the OLT. Distance range 302 extends between distance 143 and distance 146. Distance range 303 extends between distance 146 and distance 149. Distance range 304 extends between distance 149 and distance 150. The distance ranges 301, 302, 303, 304 may have an equal length 200 as illustrated in Figure 2, or may have a different length. It may, for example, be advantageous to provide the distance ranges in proportion to an expected number of prospective ONUs within that region. This may be based on a number of already associated ONUs within the region. The OLT 1 provides ONU discovery for each of the distance ranges 301, 302, 303, 304 in a separate way. The OLT 1 may provide sequential servicing of the distance ranges. As an example, the OLT 1 may first provide ONU discovery within distance range 301, followed by performing a series of other tasks, e.g. downstream communication for already established ONUs. Then, the OLT 1 may provide discovery of ONUs within distance range 302 and subsequently perform another task that is unrelated to ONU discovery. This may again be followed by providing ONU discovery for distance range 303 and so on. The OLT 1 may provide ONU discovery over the distance ranges 301, 302, 303, 304 repeatedly over time, in order to continuously give new ONUs a chance to join the PON 100. A certain distance range may advantageously be serviced more frequently over time than others, for example based on a high number of previous discoveries that recently occurred in that region. Discovery of the distance ranges may be included in a sequence of tasks that is repeated during a certain time period.

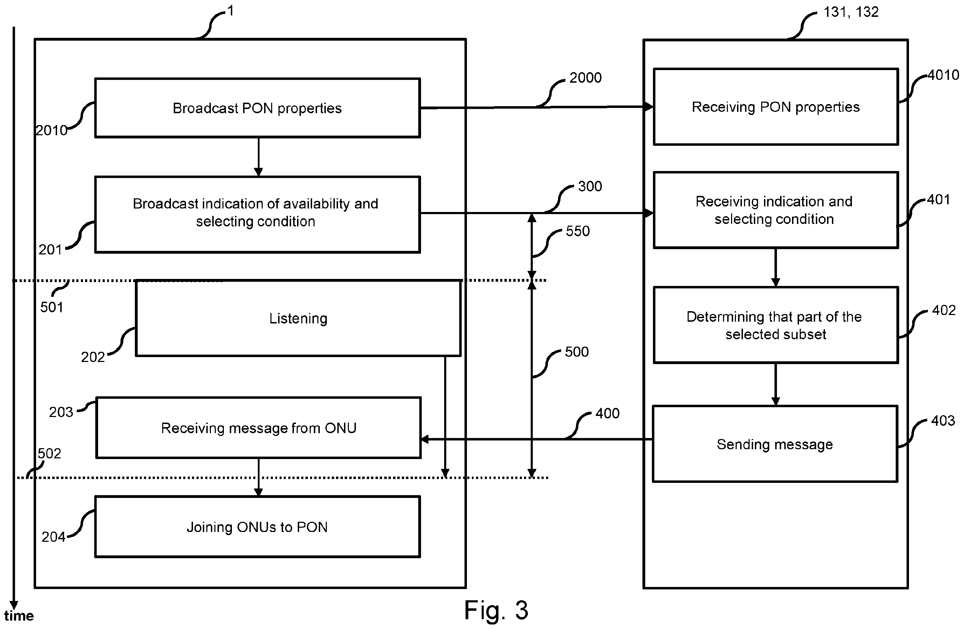

Figure 3 illustrates the steps involved in ONU discovery for distance range 301. The corresponding new ONUs 131, 132 may be discovered through the process shown in Figure 3. The vertical time axis on the left of Figure 3 indicates the occurring of the steps over time. As part of ONU discovery, the OLT may broadcast 2010 PON properties 2000 at regular time intervals. This may be done by transmitting broadcasting system profile, channel profile and burst profile PLOAM messages, e.g. according to International Telecommunication Union, ITU, standard G.9804.2 defined for higher speed PONs. The system profile message, channel profile message and burst profile message may indicate the following to ONUs: the type of PON, time-division multiplexing information, a preamble size to be used during upstream communication and other parameters enabling the ONUs to communicate according to a protocol determined by the OLT. Upon the broadcasting 2010, the ONUs 131, 132 can receive 4010 the PON properties 2000 that are transmitted via the ODN 12.

After the broadcasting 2010, the OLT 1 may proceed to broadcasting 201 at least one message or optical signal 300. The at least one message comprises an indication of an availability of the OLT 1 for discovering new ONUs and a selecting condition. The selecting condition limits the new ONUs 131, 132, 135 to a subset 31 of ONUs 131, 132 located within the predetermined distance range 301. The at least one message may also comprise condition-related information comprising information that enables the ONUs 131, 132 to evaluate the selecting condition or to speed up the evaluation. The indication of availability, the selecting condition and the condition-related information may be combined into a message or may be sent in separate messages.

The selecting condition may be time-related, for example defining a message travel time range corresponding to a range of travel times of messages exchanged between the OLT and ONUs within the predetermined distance range 301. The distance is linked to travel time by the principle of time of flight: *d* = c * t, wherein d denotes a travelled distance, c denotes the speed of a travelling optical signal in the ODN 12 and t denotes the time that it takes the optical signal to travel over the distance. The parameter c may depend on the physical properties of the fibre optic used in the PON. The OLT may be configured to communicate a value of c as condition-related information to the ONUs to enable more accurate evaluation of a time-based or distance-based condition by the ONUs. The OLT can provide a time-based condition, e.g. tₘᵢₙ < X < tₘₐₓ, related to the distance range 301 via time of flight. X may denote the time at which the ONU 131 receives the selecting condition. Alternatively, X may denote a difference between the time when the ONU 131, 132 receives the selecting condition and the time when the OLT 1 sent the message. Such a time-related selecting condition requires the ONUs 131, 132, 135 to determine when the OLT 1 has sent the condition. To this end, the OLT 1 may provide a timestamp using an external clock, e.g. the world clock, as condition-related information together with the selecting condition. ONUs 131, 132, 135 may, for example determine the external clock time by using a GPS. Additionally or alternatively, the selecting condition may be based on dispersion characteristics corresponding with the predetermined distance range. Additionally or alternatively, the selecting condition may be based on PON topology information enabling an ONU to determine a distance to the OLT.

In the burst profile message as defined in standard G.9804.2, there are two parameters provided denoted by ONURₛₛᵢMin and ONURₛₛᵢMax. These values define the signal strength bounds between which incoming signals from the OLT 1 are to be accepted during operation at an ONU within the PON. Whenever the signal strength exceeds the interval bounded by ONURₛₛᵢMin and ONURₛₛᵢMax, it is assumed that no valid signal has been transmitted by the OLT 1 and the ONUs automatically discard the incoming signal. This power interval may be incorporated as condition-related information to provide additional restrictions on the selecting condition. However, the signal strength interval defined by ONURₛₛᵢMin and ONURₛₛᵢMax cannot on itself serve as a selecting condition. The signal strength interval is not able to limit the new ONUs 131, 132, 135 to a subset 31 of ONUs 131, 132 located within the predetermined distance range 301, since signal strength cannot be directly linked to distance within the PON 100.

According to an example, the availability may be provided by a single discovery message. The discovery message may be a bandwidth map, BWmap, message and may comprise a request for a serial number of prospective ONUs 131, 132. The BWmap discovery message may also comprise condition-related information relevant for ONUs within any of the distance ranges 301, 302, 303, 304. Alternatively, condition-related information may be provided using a separate PLOAM message, which may be broadcasted before the discovery message and may be broadcasted before any conditional messages. Each of the selecting conditions may be sent before the availability, in one or more PLOAM messages. During these conditional PLOAM message, identifiers, IDs, may be allocated to the ONUs based on the distance range they correspond to. A single identifier may correspond to each of the possible distance ranges, thereby identifying the distance range. The BWmap message can then give permission to ONUs within one distance range, e.g. distance range 301, to be discovered, by requesting serial numbers from those ONUs having an ID corresponding to said distance range 301 as allocated by the corresponding conditional PLOAM message. This may be executed using a contention-based function. The ONUs 131, 132 can attempt to respond to the OLT during the same time interval and channel as allocated by the contention-based function. After handling the corresponding distance range 301, the OLT may handle the next distance range 302. Advantageously, it is not necessary to repeat the condition-based information for following distance ranges 302, 303, 304. It is noted that the discovery message may be broadcasted before or after the condition message.

Upon receiving 401 the indication of availability and upon determining 402 that the selecting condition is fulfilled, the ONUs 131, 132 may reply 403 to the message 300 with a message 400. The message 400 may, for example, comprise a serial number of the ONU 131, 132. In the meantime, after sending the message 300, the OLT 1 listens 202, during a quiet window 500 associated with the distance range 301, for messages in response to the broadcasting 201. The quiet window starts at a time 501 and ends at a time 502. After receiving 203 a message from ONU 131 or ONU 132, the OLT 1 can proceed with joining 204 the ONUs 131, 132 to the PON 100.

The quiet window 500 has a duration of at least a difference 200 between the message travel time 250 and the message travel time 240. An additional time margin may be taken into account. Further, the listening 202 starts after a first time interval 550 upon finishing the broadcasting. The first time interval 550 is at least two times the message travel time 240, i.e. the time it takes for a message to travel back and forth between the OLT 1 and the closest ONU of distance range 301.

As used in this application, the term "circuitry" may refer to one or more or all of the following: (a) hardware-only circuit implementations (such as implementations in only analog and/or digital circuitry) and (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation. This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. An optical line terminal (1), OLT, for a passive optical network (100), PON, configured to provide discovery of optical network units (131, 132, 135), ONUs, by performing the steps of:
- broadcasting (201) at least one message (300), comprising an indication of an availability of the OLT (1) for discovering new ONUs (131, 132, 135); and a selecting condition limiting the new ONUs (131, 132, 135) to a subset (31) of ONUs (131, 132) located within a predetermined distance range (301) from the OLT (1); and
- listening (202), during a quiet window (500) associated with the predetermined distance range (301), for messages (400) in response to the broadcasting, sent by the subset (31) of ONUs (131, 132).

2. The OLT according to claim 1, wherein the quiet window (500) has a duration of at least a difference (200) between:
- a message travel time (250) between the OLT (1) and an ONU of the subset (31) located furthest away (143) from the OLT; and
- a message travel time (240) between the OLT (1) to an ONU of the subset (31) located closest (140) to the OLT.

3. The OLT according to claim 2, wherein the listening starts after a first time interval (550) upon finishing the broadcasting, wherein the first time interval (550) is at least two times the message travel time (240) between the OLT (1) and the ONU of the subset (31) located closest (140) to the OLT (1).

4. The OLT according to any one of the preceding claims, wherein the steps are iteratively performed for a plurality of subsets (31, 32, 33, 34) of ONUs within a respective plurality of predetermined distance ranges.

5. The OLT according to any one of the preceding claims, wherein the at least one message further comprises condition-related information comprising information for evaluation of the selecting condition.

6. The OLT according to any one of the preceding claims, wherein the at least one message (300) comprises a broadcasting message, comprising both the indication and the selecting condition.

7. The OLT according to any one of claims 1-5, wherein the at least one message (300) comprises a discovery message, comprising the indication, and a condition message, comprising the selecting condition.

8. The OLT according to claim 7, wherein the discovery message is broadcasted after the condition message.

9. The OLT according to claim 7, wherein the discovery message comprises a bandwidth map, BWmap, message comprising a request for a serial number of prospective ONUs.

10. The OLT according to any one of the preceding claims, wherein the selecting condition defines a message travel time range corresponding to a range of travel times of messages exchanged between the OLT and ONUs within the predetermined distance range.

11. The OLT according to claim 10, wherein the selecting condition comprises a timestamp with respect to an internal clock of the OLT and a mapping between the internal clock and a common reference clock, for calculation of the message travel time range by the ONUs.

12. The OLT according to any one of the preceding claims, wherein the selecting condition is based on dispersion characteristics corresponding with the predetermined distance range.

13. The OLT according to any one of the preceding claims, wherein the at least one message (300) further comprises physical PON characteristics enabling an ONU to determine a distance to the OLT.

14. An optical network unit (131, 132, 135), ONU, configured to join a passive optical network (100), PON, by performing the steps of:
- receiving (401) at least one message (300) from an optical line terminal (1), OLT, the at least one message (300) comprising:
- an indication of an availability of the OLT (1); and
- a selecting condition related to a predetermined distance range (301) from the OLT (1);
- determining (402) if the ONU fulfils the selecting condition;
- upon determining that the ONU fulfils the selecting condition, sending a response message (400) to the OLT (1) to join the PON.

15. The ONU according to claim 14, wherein the at least one message (300) comprises a bandwidth map, BWmap, message comprising a request for a serial number, and wherein the response message (400) comprises a serial number of the ONU.
